# EUROPÄISCHE PATENTSCHRIFT

(11) **EP 1 251 338 B1**
(45) Veröffentlichungstag und Bekanntmachung des Hinweises auf die Patenterteilung: **17.11.2004**
(21) Anmeldenummer: 01109748.2
(22) Anmeldetag: 20.04.2001
(51) Int. Cl.: G01D 5/24, G01D 5/241

(54) **Kapazitiver Sensor und Verfahren zur Messung von Kapazitätsänderungen**
Capacitive sensor and method of measuring changes in capacitance
Capteur capacitif et procédé de mesure des variations de la capacité

(43) Veröffentlichungstag der Anmeldung: 23.10.2002
(73) Patentinhaber: Camille Bauer AG, 5610 Wohlen (CH)
(72) Erfinder: Keller, Hans, 5610 Wohlen (CH)
(74) Vertreter: Troesch Scheidegger Werner AG

(56) Entgegenhaltungen:
- DE-A- 19 743 288
- FR-A- 1 381 070
- US-A- 4 860 232
- US-A- 5 412 327
- HABEKOTTE E ET AL: "A SMART DIGITAL-READOUT CIRCUIT FOR A CAPACITIVE MICROTRANSDUCER" IEEE MICRO, IEEE INC. NEW YORK, US, Bd. 4, Nr. 5, 1. Oktober 1984 (1984-10-01), Seiten 44-54, XP002041050 ISSN: 0272-1732

## Beschreibung

Die vorliegende Erfindung betrifft ein Verfahren nach dem Oberbegriff von Anspruch 1 sowie einen Messumformer nach dem Oberbegriff von Anspruch 8.

Es ist bekannt, mit Hilfe von Ladungsverstärkern mit nachgeschalteter Gleichrichtung die Grösse und Änderung einer Kapazität zu bestimmen. Eine Methode zur Messung einer physikalischen Grösse und Erzeugung eines weiterverarbeitbaren elektrischen Signals beruht nun darauf, dass die zu messende physikalische Grösse direkt auf einen einstellbaren Kondensator einwirkt und damit eine Änderung dessen Kapazität bewirkt. Die Grösse oder Änderung der Kapazität wird beispielsweise mit Hilfe des Ladungsverstärkers mit nachgeschaltetem Gleichrichter bestimmt. Um eine präzise Messung zu ermöglichen, muss nun dem Ladungsverstärker eine genaue Sinusspannung zugeführt werden und anschliessend phasengerecht gleichgerichtet werden, damit das Ausgangssignal proportional zur Änderung der Kapazität und damit zur Änderung der physikalischen Grösse anfällt.

Aus der CH 662 177 ist nun ein solches Verfahren zur Umformung einer physikalischen Grösse in ein proportionales elektrisches Signal beschrieben. Die physikalische Grösse, beispielsweise ein Winkel oder ein Weg, wird zuerst mittels eines einstellbaren Kondensators, welcher mit einem einfach zu realisierenden Rechteckspannungsgenerator gespiesen ist, umgeformt und von einem nachgeschalteten Verstärker verstärkt. Durch einen Schaltmechanismus, welcher gegenüber der Rechteckspannung resp. der jeweiligen Impulse verzögert betrieben ist, wird eine gleichgerichtete Stromgrösse am Ausgang des Messumformers als Mass für die physikalische Grösse bereitgestellt. Trotz Verzichtes auf die Erzeugung einer genauen Eingangs-Sinusspannung erlaubt diese Methode eine von Störeffekten, beispielsweise durch Zeitverzögerung der einzelnen Messelemente oder dem Eigenschwingverhalten der Messvorrichtung, praktisch befreites, exaktes Messergebnis zu erhalten.

Der Nachteil des obigen Verfahrens ist darin zu sehen, dass insbesondere für die Messung von Winkelwerten lediglich ein Bereich von ca. 5° bis 150° mit zuverlässigen Messresultaten gemessen werden kann. Bei grösseren Messbereichen, beispielsweise bis zu 270° muss die Abweichung der Linearität des Messresultates mit dem effektiven Messwert durch einen speziellen Abgleich korrigiert werden und die Messauflösung ist geringer als beim kleineren Messbereich.

Die Aufgabe der vorliegenden Erfindung bestand nun darin, dass oben beschriebene Verfahren weiter zu optimieren und insbesondere den Messbereich bei Winkelwerten bis 360° auszudehnen, bei hoher Messauflösung und Genauigkeit.

Diese Aufgabe wird erfindungsgemäss durch ein Verfahren mit den kennzeichnenden Merkmalen nach Anspruch 1 gelöst.

Bevorzugte Ausführungsformen des erfindungsgemässen Verfahrens ergeben sich weiter aus den Merkmalen der Ansprüche 2 bis 7.

Im Gegensatz zum bekannten Verfahren, welches eine kontinuierliche Messung umfasste, werden die Messdaten nun in diskreten einzelnen Schritten erfasst und zwischengespeichert, und zwischen den einzelnen Schritten wird ein Reset-Vorgang ausgelöst. Die zwischengespeicherten Resultate werden verwendet, um mit vorgegebenen Parametern ein digitales Messresultat als Wert der zu messenden Grösse zu erzeugen, welches anschliessend über einen DA-Wandler schliesslich als analoges Stromsignal zur weiteren Verwendung bereitgestellt werden kann.

Durch die bevorzugte Verwendung von vier benachbarten und einander überlappenden Kondensatorelektroden mit gemeinsamer Ausgangselektrode als Messelement kann der Messbereich vorteilhaft auf 360° ausgedehnt werden, bei gleichbleibender Messauflösung im Vergleich mit der herkömmlichen Methode im Bereich bis 150° mit maximal zwei nebeneinanderliegenden Elektrodenbereichen eines Differentialdrehkondensators.

Erfindungsgemäss wird ein Vorrichtung zur Durchführung des Verfahrens mit den Merkmalen von Anspruch 8 vorgeschlagen. Bevorzugte Ausführungsformen ergeben sich aus den Merkmalen der weiteren Ansprüche 9 und 10.

Eine derartige Messvorrichtung ist vorteilhaft sehr kompakt aufgebaut und weist einen Messbereich von 360° auf. Die erzeugten analogen oder digitalen Signale sind über den gesamten Messbereich sehr genau und stabil.

Ein Ausführungsbeispiel der vorliegenden Erfindung wird nachstehend anhand von Figuren noch näher erläutert. Es zeigen
Fig. 1 schematisch die Schaltung einer erfindungsgemässen Messvorrichtung;
Fig. 2 den Spannungsverlauf über den Kondensatorelektroden der Messvorrichtung nach Figur 1 während eines Messzyklus bei einer Winkelstellung von 45°;
Fig. 3 die Spannungskurven über den gesamten Drehbereich der Messvorrichtung von 360°;
Fig. 4 die Ansicht einer erfindungsgemässen Kondensatorplatte mit Fahne; und
Fig. 5 die Ansicht einer erfindungsgemässen Empfangselektrodenplatte.

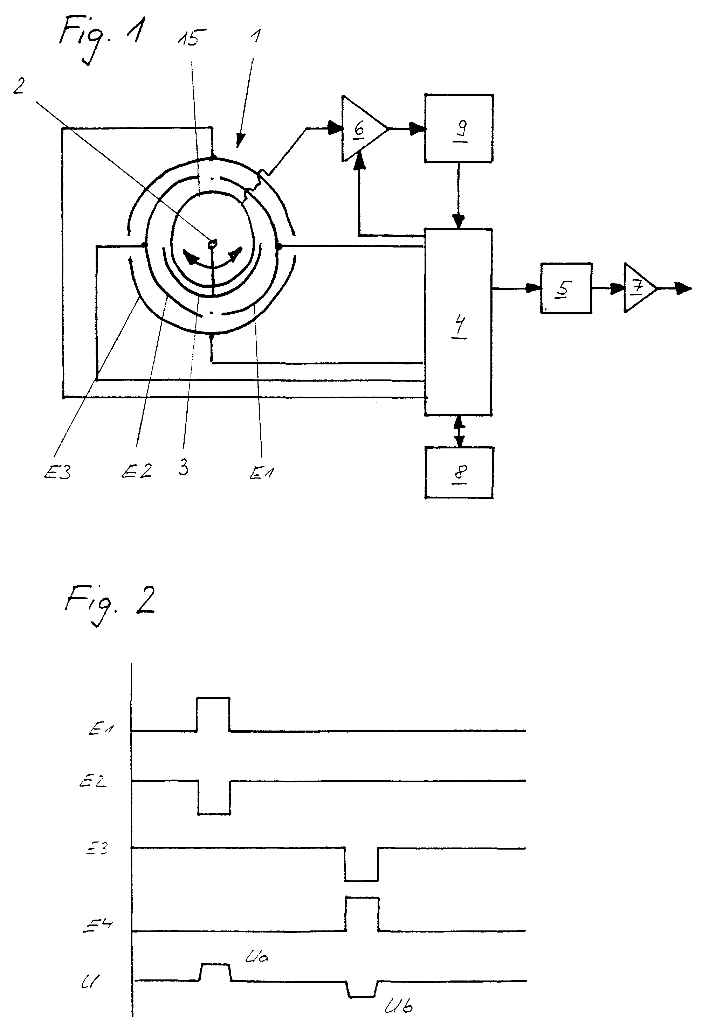

In Figur 1 ist schematisch der Aufbau der Schaltung einer erfindungsgemässen Messeinrichtung zur Durchführung des erfindungsgemässen Messverfahrens dargestellt. Ein Differenz-Schirmkondensator 1 ist mit vier konzentrisch angeordneten und sich jeweils halbkreisförmig um das Drehachse 2 angeordneten Elektroden E1, E2, E3 und E4 ausgestattet. Dabei überlappen sich die halbkreisförmigen Elektrodenbereiche benachbarten Elektroden um ca. 90°. Ebenfalls konzentrisch, aber um die Drehachse 2 um wenigstens 360° verdrehbar ist eine Fahne 3 angeordnet, welche zwischen den Elektroden E1, E2, E3 und E4 sowie einer gemeinsamen Messelektrode 15 angeordnet ist. Das Verdrehen der Fahne 3 relativ zu den Elektroden E1, E2, E3 und E4 bewirkt eine Kapazitätsänderung zwischen diesen Elektroden und der Messelektrode 15. Die Elektroden E1, E2, E3 und E4 sind direkt mit einer Mikroprozessoreinheit 4 verbunden, welche integriert einen Rechteckoszillator beinhaltet. Von der Messelektrode 15 führt eine Zuleitung zum Messverstärker 6, welcher über einen AD-Wandler 9 ebenfalls mit dem Mikroprozessor 4 verbunden ist. Der digitale Ausgang des Mikroprozessors 4 führt über einen DA-Wandler 5 zu einem Stromverstärker 7, welcher schliesslich einen zur Winkelstellung der Fahne 3 proportionalen Messstrom abgibt, entsprechend der jeweils angesteuerten Elektrode E1, E2, E3 oder E4.

Im Gegensatz zur schematischen Darstellung von Figur 1 liegen in der praktischen Ausführung des Schirmkondensators 1 die Elektroden E1, E2, E3, E4 und 15 sowie die Fahne 3 nicht in einer gemeinsamen Ebene, sondern es liegen sich die Elektroden E1, E2, e3 und E4, welche gemeinsam in einer Ebene angeordnet sind, und die gemeinsame Messelektrode 15 parallel entlang der Achse 2 beabstandet gegenüber. Die Fahne 3 ist dabei zwischen den zwei durch die genannten Elektroden gebildeten Ebenen angeordnet, so dass sowohl der Abstand zwischen jeder Elektrode E1, E2, E3 und E4 und der Messelektrode 15 wie auch der Abstand der Fahne 3 zu den Elektroden den gleichen, konstanten Wert aufweist.

Weiter ist ein Speicherbaustein 8 vorhanden, vorteilhaft in der Ausführung eines EEPROM's, um die nachfolgend erläuterten Berechnungskonstanten zu speichern und dem Mikroprozessor 4 für die Erzeugung des Ausgangssignals zur Verfügung zu stellen.

Ein einzelner diskreter Messvorgang resp. Messzyklus läuft nun jeweils in den folgenden drei Schritten ab. Als erster Schritt wird jeweils die Nullspannung U₀ des Messverstärkers 6 mit zurückgesetztem Messverstärker 6 gemessen. Als zweiter Schritt werden die beiden Elektroden E1 und E2 angesteuert und die Spannung Uxa über die Messelektrode 15 und den Messverstärker 6 gemessen. Als dritter Schritt wird nun die Differenz zwischen dieser Spannung und dem Nullwert berechnet, d.h. der Wert Ua = Uxa - U₀ berechnet.

Beim dargestellten Aufbau nach Figur 2 wird nun in einem folgenden Messzyklus die Spannung Ub über den Elektroden E3 und E4 nach obigem Schema ebenfalls in drei Schritten gemessen resp. berechnet.

Die gemessenen resp. berechneten Werte werden im Mikroprozessor 4 zwischengespeichert und unter Anwendung von im Speicherbaustein 8 gespeicherten Daten für die Berechnung einer digitalen, ganzzahligen Winkelgrösse verwendet. Für diese Berechnung werden herkömmliche Formeln resp. lineare Gleichungen für die Berechnung der Werte aufgrund der linearen Kennlinien für Ua und Ub eingesetzt.

Die so erzeugte digitale Winkelgrösse wird nun vorteilhaft über den DA-Wandler 5 in ein analoges Stromsignal umgewandelt und über einen Stromverstärker 7 als analoges Stromsignal am Ausgang der Messeinrichtung zur Verfügung gestellt. Selbstverständlich kann auch die digitale Winkelgrösse des Mikroprozessors 4 selbst zur weiteren Verwendung beispielsweise einer weiteren digitalen Auswerte- oder Steuereinheit zugeführt werden.

Die zwischengespeicherten Werte resp. die digitale Winkelgrösse verbleiben so lange im Zwischenspeicher des Mikroprozessors 4, bis der nächste folgende Messzyklus abgeschlossen ist und die neuen Resultate bereitgestellt sind. Vorteilhaft wird damit trotz diskreter Messvorgänge resp.

Messzyklen ein kontinuierlicher Ausgangswert bereitgestellt, welcher praktisch keinen Störeinflüssen ausgesetzt ist, da zu Beginn jedes Messzyklus der Messverstärker 6 zurückgesetzt und dessen Nullwert gemessen wird.

In Figur 2 sind schematisch die Signale resp. Spannungsverlauf während zweier aufeinanderfolgender Messzyklen dargestellt. Die beiden oberen Kurven zeigen den Spannungsverlauf über den Elektroden E1 und E2, die unteren Kurven den Spannungsverlauf über den Elektroden E3 und E4 und die unterste Kurve den resultierenden Spannungsverlauf am Messverstärker 6. Ein typischer derartiger Messvorgang dauert ca. 2 ms.

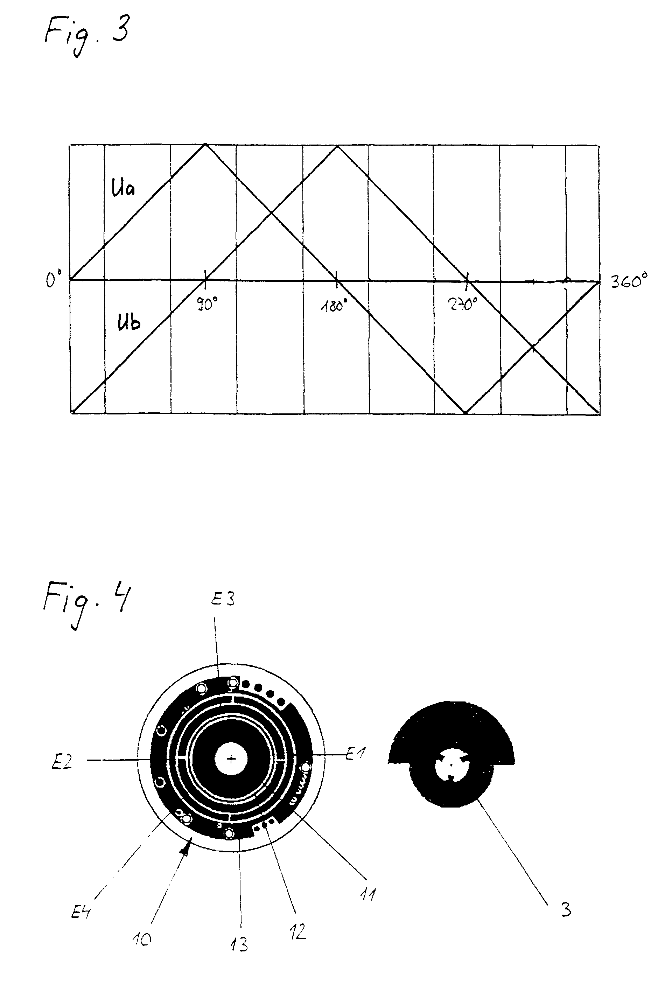

In Figur 3 ist der lineare Spannungsverlauf von Ua und Ub über den Winkelbereich von 360° der Messkapazität beim Einsatz von vier gleichmässig über den Umfang angeordneten Elektroden E1, E2, E3 und E4 dargestellt. Wie daraus zu ersehen ist, wird jeweils eine zur Winkelstellung der Fahne 3 linear proportionale Spannung Ua resp. Ub über jeweils zwei Elektroden E1 und E2, resp. E3 und E4 erzeugt.

Die Berechnung des digitalen Winkelwertes y in einem bevorzugten Grössenbereich von 0 bis 3600, d.h. mit einer Genauigkeit von 0,1°, kann nun aufgrund dieser beiden Kurven mit bekannter linearer Charakteristik mit bekannten Berechnungsmethoden erfolgen.

Da für die Berechnung des Winkelwertes grundsätzlich beide Werte, nämlich Ua und Ub herangezogen werden können, wird der Messbereich von 360° vorzugsweise in verschiedene Sektoren unterteilt, vorteilhaft in 8 Bereiche, wie dies in Figur 3 dargestellt ist. Damit lassen sich für die Berechnung Kriterien definieren, welche dem Umstand Rechnung tragen, dass die Messresultate im Bereich der jeweiligen Spannungsmaxima resp. -minima der beiden Kurven Ua resp. Ub relativ ungenau sind, d.h. in diesen Bereichen die angenommene Linerarität der Kapazitätswerte der Messelektroden nicht mehr erreicht wird. So werden in den Sektoren, welche solche Spannungsspitzen der einen oder anderen Kennlinie Ua oder Ub aufweisen, nur die Werte der jeweils anderen Kennlinie ausgewertet. Dies ist in Figur 3 beispielsweise in den Sektoren 0, 2, 4, 6 und 8 der Fall. In den übrigen Sektore, d.h. den Sektoren 1, 3, 5 und 7 wird jeweils der Durchschnitt der beiden Kurven Ua und Ub berechnet und als Wert gespeichert. Dadurch kann über den gesamten Messbereich von 360° eine annähernd identische Linearität der Kapazitätswerte und damit der gemessenen Winkelwerte erreicht werden, was zu genauen Messresultaten über diesen gesamten Messbereich führt.

Je nach Wahl der Parameter für die Berechnung der Winkelwerte und der Kapazität der Kondensatoren lassen sich beispielsweise ganzzahlige digitale Werte zwischen 0 und 4000 errechnen und über den DA-Wandler vorzugsweise ein analoges Signal zwischen ca. 3 mA und 22 mA erzeugen.

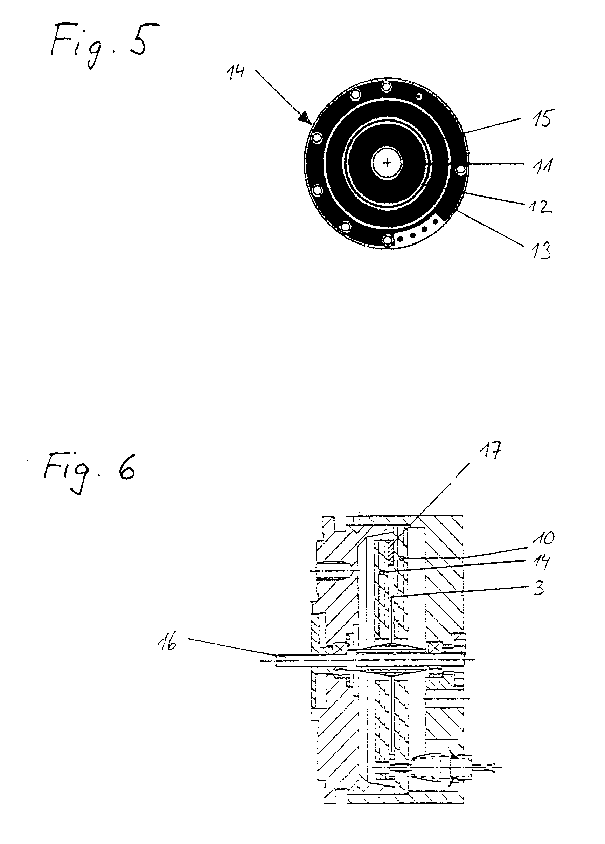

In Figur 4 ist noch die Ansicht einer Statorplatte 10 für eine erfindungsgemässe Vorrichtung mit darauf angeordneten Elektrodenbahnen E1, E2, E3 und E4 und daneben die dazugehörige Fahne 3 dargestellt. Die Statorplatte 10 ist vorzugsweise als kreisrunde, flache Platte ausgeführt und besitzt vorteilhaft eine Kompensationsleiterbahn 11, welche als umlaufende Leiterbahn ausgebildet ist.

Radial nach Aussen schliesst sich an die Kompensationsleiterbahn 11 eine erste Abschirmleiterbahn 12 auf, wonach die vier Elektrodenbahnen E1, E2, E3 und E4 folgen, welche die Elektroden der Messkapazität bilden, wie in Figur 1 schematisch dargestellt. Anschliessend an diese Elektrodenbahnen folgt nochmals eine umlaufende Abschirmleiterbahn 13.

Weiter ist analog zur Statorplatte 10 eine Empfangselektrodenplatte 14 vorhanden, welche grundsätzlich den gleichen Aufbau wie die Statorplatte 10 aufweist, mit dem Unterschied, dass anstelle der vier voneinander getrennten Elektrodenbahnen E1, E2, E3 und E4 die gemeinsame, umlaufende Messelektrode 15 ausgebildet ist, wie in Figur 5 dargestellt.

Die Statorplatte 10, die Fahne 3 und die Empfangselektrodenplatte 14 bilden zusammen den Messkondensator 1 der erfindungsgemässen Vorrichtung, wobei die Fahne 3 zwischen der Statorplatte 10 und der Empfangselektrodenplatte 14 drehbar um ihre Achse 2 ausgebildet angeordnet ist und mit einer aus dem Gehäuse der Vorrichtung herausragenden Achse 16 verbunden ist, wie in Figur 6 in Längsschnitt durch die erfindungsgemässe Vorrichtung dargestellt ist. Zwischen der Statorplatte 10 und der Empfangselektrodenplatte 14 wird ein Distanzring 17 angebracht, welcher einen definierten Abstand der beiden Platten und der Fahne 3 im eingebauten Zustand erzielt. Die Fahne 3 besteht vorzugsweise aus Aluminiumblech, welches vorzugsweise eine Dicke von 0.3 mm aufweist. Vorzugsweise wird die Kapazität zwischen der Messelektrode 15 und den Elektrodenbahnen E1, E2, E3 und E4 möglichst klein gehalten, beispielsweise ca. 0.4 pF, um den Einfluss der Gleichtaktspannung auf die Fahne 3 möglichst klein zu halten.

Vorteilhaft kann die Fahne 3 zusätzlich zwischen den Messzyklen mit einem Gegenimpuls beaufschlagt werden, um dessen stetige Aufladung und damit Verfälschung der gemessenen Kapazitätswerte resp. Spannungen zu reduzieren resp. zu vermeiden.

## Patentansprüche

1. Verfahren zur Umwandlung einer physikalischen Grösse in ein zu dieser Grösse proportionales elektrisches Signal, wobei mindestens ein Kondensator (1) mit proportional zur Änderung der physikalischen Grösse variabler Kapazität mit einem Eingangs-Impulssignal beaufschlagt wird und das Ausgangssignal über einen Messverstärker (6) verstärkt wird, **dadurch gekennzeichnet, dass** während einem Messzyklus in einem ersten Schritt die Nullspannung (U₀) des Messverstärkers (6) mit zurückgesetztem Messverstärker (6) gemessen wird, in einem zweiten Schritt der Kondensator (1) mit dem Eingangs-Impulssignal beaufschlagt wird und das resultierende Ausgangssignal des Messverstärkers (6) gemessen wird, wobei die gemessenen Spannungswerte des Messverstärkers (6) jeweils über einen A/D Wandler (9) digitalisiert und diese digitalisierten Werte zwischengespeichert werden, und in einem dritten Schritt die Differenz zwischen dem digitalisierten Wert des Kondensators (1) und dem digitalisierten Wert der Nullspannung (U₀) berechnet wird, und der berechnete Differenzwerte ebenfalls zwischengespeichert wird, wobei aufgrund dieses Wertes das zur genannten physikalischen Grösse proportionale elektrische Signal über dem Kondensator (1) als digitaler Wert berechnet und ebenfalls zwischengespeichert wird, bis der nächstfolgende Messzyklus abgeschlossen ist und die neuen Resultate bereitgestellt sind.

2. Verfahren nach Anspruch 1, **dadurch gekennzeichnet, dass** sowohl die Erzeugung des Eingangs-Impulssignales wie auch die Erfassung und Verarbeitung der digitalen Werte des AD-Wandlers (9) in einem Mikroprozessor (4) erfolgen und die Werte in einem dem Mikroprozessor (4) zugeordneten elektronischen Speicher (8) zwischengespeichert werden.

3. Verfahren nach Anspruch 1 oder 2, **dadurch gekennzeichnet, dass** vier Kondensatoren (E1, E2, E3, E4) mit gemeinsamer Ausgangselektrode eingesetzt werden, wobei jeweils die Werte von zwei Kondensatoren nacheinander in einem Messzyklus erfasst und ausgewertet werden, wobei jeder Kondensator einen Wirkbereich von ca. +- 180° aufweist.

4. Verfahren nach einem der Ansprüche 1 bis 3, **dadurch gekennzeichnet, dass** ein Berechnungsalgorithmus für die Berechnung der digitalen Werte eingesetzt wird, welcher über den gesamten Messbereich von 360° ganzzahlige Werte, vorzugsweise zwischen ca. 0 und 4000, liefert.

5. Verfahren nach einem der Ansprüche 1 bis 4, **dadurch gekennzeichnet, dass** zusätzlich zu den Messelektroden der Kondensatoren Kompensationselektroden (11) zeitsynchron mit dem Impulssignal angesteuert werden.

6. Verfahren nach einem der Ansprüche 1 bis 5, **dadurch gekennzeichnet, dass** der Messbereich in mehrere Sektoren aufgeteilt wird, und in den Sektoren mit Maximal- resp. Minimalwerten der Kondensatoren jeweils nur der Wert des resp. der anderen Kondensatoren verwendet wird.

7. Verfahren nach Anspruch 6, **dadurch gekennzeichnet, dass** in den Sektoren ohne Maximal- oder Minimalwerte immer der Durchschnitt der ermittelten Winkelwerte der Kondensatoren berechnet wird.

8. Vorrichtung zur Durchführung des Verfahrens nach einem der Ansprüche 1 bis 7 mit einem Dreh-Messkondensator (1) und damit verbundenem Messverstärker (6), **dadurch gekennzeichnet, dass** sie einen Mikroprozessor (4), einen DA-Wandler (5) und einen Speicherbaustein (8) aufweist und der Messkondensator (1) aus mindestens zwei parallel zueinander beabstandet angeordneten Leiterplatten (10;14) mit dazwischen drehbar angeordneter Abschirmfahne (3) aufgebaut ist, wobei eine Leiterplatte (10) mindestens jeweils vier konzentrisch zur Drehachse (16) der Abschirmfahne (3) angeordnete und voneinander elektrisch getrennte Leiterbahnbereiche (E1,E2,E3,E4) aufweist.

9. Vorrichtung nach Anspruch 8, **dadurch gekennzeichnet, dass** die Leiterbahnen jeweils als halbkreisförmige, voneinander getrennte Bahnen (E1, E2, E3, E4) ausgebildet sind, wobei jeweils zwei Bahnen (E1,E2;E3,E4) denselben Durchmesser aufweisen und die Trennstellen zwischen den einen beiden Bahnen (E1,E2)gegenüber den Trennstellen der anderen beiden Bahnen (E3,E4) um 90° versetzt angeordnet sind.

10. Vorrichtung nach Anspruch 8 oder 9, **dadurch gekennzeichnet, dass** die Fahne (3) aus einem Aluminiumblech besteht, vorzugsweise mit einer Dicke zwischen 0.2 und 0.5 mm.

## Claims

1. Method for the transformation of a physical magnitude into an electrical signal proportional to said magnitude, wherein at least one condenser (1) with a variable capacity proportional to the changement of the physical magnitude is supplied with an input impulse signal and wherein the output signal is amplified by a measuring amplifier (6), **characterized in that** during a measuring cycle in a first step the zero voltage (U₀) of the measuring amplifier (6) will be measured with a resetted measuring amplifier (6), in a second step the condenser (1) will be supplied with the input impulse signal and the resulting output signal of the measuring amplifier (6) will be measured, wherein the measured voltage values of the measuring amplifier (6) will each be digitized by an a/d transducer (9) and those digitized values will be stored temporary, and in a third step the difference between the digitized value of the condenser (1) and the digitized value of the zero voltage (U₀) will be calculated and this calculated value will be stored temporary as well, whereas as a result of this value the electrical signal proportional to said physical magnitude over the condenser (1) will be calculated as digitized value and stored temporary as well until the following measuring cycle is finished an the new measuring results are completed.

2. Method according to claim 1, **characterized in that** both the generation of the input impulse signal and the generation and processing of the digitized values of the a/d transducer (9) takes place within a microprocessor (4) and the values will be stored temporary in a memory (8) assigned to the microprocessor (4).

3. Method according to claims 1 or 2, **characterized in that** four condensers (E1, E2, E3, E4) with a common output electrode will be used, whereas at a time the values of two condensers consecutively will be collected and analyzed, wherein each of the condensers has an activity range of appx. +- 180°.

4. Method according to one of claims 1 to 3, **characterized in that** a calculating algorithm will be used for the calculation of the digitized values which provides integer values over the whole measuring range of 360°, preferably between appx. 0 and 4000.

5. Method according to one of claims 1 to 4, **characterized in that** compensation electrodes (11) will be supplied timely synchronized with the input signal additionally to the measuring electrodes of the condensers.

6. Method according to one of claims 1 to 5, **characterized in that** the measuring range is divided into multiple sectors, and that only the value of the one or some other condensers will be used in the sectors with maximum or minimum values of the condensers.

7. Method according to claim 6, **characterized in that** in the sectors without maximum or minimum values only the average of the collected angle values of the condensers will be calculated.

8. Device for executing of the method according to one of the claims 1 to 7 with a rotary measuring capacitor (1) and therewith connected measuring amplifier (6), **characterized in** comprising a microprocessor (4), an d/a transducer (5) and a memory (8) and that the measuring capacitor (1) has at least two printed circuit boards (10;14) arranged parallel to each other in a distance with a shield flag (3) pivotable arranged between said circuit boards, whereas one printed circuit board (10) comprises at least four conduction paths areas (E1, E2, E3, E4) arranged concentrically to the pivoting axis (16) of the shield flag (3) and being electrically separated from each other.

9. Device according claim 8, **characterized in that** the conduction paths are designed as semi-circular channels (E1, E2, E3, E4) separated from each other whereas each two paths (E1,E2;E3,E4) have the same diameter and that the separation location between both of the paths (E1,E2) are displaced about 90° in relation to both of the other paths (E3,E4).

10. Device according to claim 8 or 9, **characterized in that** the flag (2) consists of an aluminium sheet, preferably with a thickness of appx. 0.2 to 0.5 mm.

## Revendications

1. Procédé pour la transformation d'une magnitude physique en signal électrique proportionnel à cette magnitude, en quoi au moins un condensateur (1) avec une capacité variable proportionnel par rapport au changement de la magnitude physique est fourni avec un signal d'impulsion d'entré et le signal sortie est amplifié par un amplificateur du mesurage (6), **caractérisé en ce que** pendant une cycle du mesurage comme première pas le voltage zero (U₀) de l'amplificateur du mesurage (6) vas être mesuré avec amplificateur du mesurage (6) initialisé, qu'en deuxième pas le condensateur (1) vas être fourni avec le signal d'impulsion d'entré est le signal de sortie résultant de l'amplificateur du mesurage (6) vas être mesuré, en quoi les valeurs de voltage de l'amplificateur du mesurage (6) vont être digitalisés par un convertisseur a/n (9) et les valeurs digital vont être mémorisés temporaire, et en troisième pas la différence entre le valeur digitale du condensateur (1) et le valeur digitale du voltage zero (U₀) vas être calculé, et le valeur calculé vas être également mémorisé temporairement, en quoi en vertu de cet valeur le signal électrique à travers du condensateur (1) proportionnel par rapport au précité magnitude physique vas être calculé comme valeur digitale et mémorisé également jusqu'à l'achèvement du cycle suivant et mis à disposition des résultats nouveaux.

2. Procédé selon la revendication 1, **caractérisé en ce que** la génération du signale d'impulsion d'entré et le captage et exploitation des valeurs digitales du convertisseur a/n (9) ont lieu dans un microprocesseur (4) et que les valeurs vont être mémorisés temporaire dans un mémoire électronique (8) lié au microprocesseur (4).

3. Procédé selon la revendication 1 ou 2, **caractérisé en ce que** quatre condensateurs (E1, E2, E3, E4) avec une commune électrode de sortie vont être utilisés, par quoi les valeurs de deux condensateurs respectivement vont être captés et évalués l'un après l'autre, à quoi chacun des condensateurs à un secteur d'action de +- 180° approximatif.

4. Procédé selon une des revendications 1 à 3, **caractérisé en ce qu'**un algorithme de calcul pour calculer les valeurs digitales vas être employés qui fournit de numéros entiers à travers du secteur du mesurage entiers de 360°, de préférence entre 0 et 4000 approximatif.

5. Procédé selon une des revendications 1 à 4, **caractérisé en ce que** des électrodes de compensations (11) vont être dirigées synchronisé en temps avec le signal d'impulsion supplémentaire aux électrodes du mesurages.

6. Procédé selon une des revendications 1 à 5, **caractérisé en ce que** le domaine de mesurage est divisé en plusieurs secteurs, et que dans les secteurs avec maximum ou minimum valeurs des condensateurs, seulement le valeur du ou des autres condensateurs respectivement vas être utilisé.

7. Procédé selon la revendication 6, **caractérisé en ce que** dans les secteurs sans maximum ou minimum valeurs toujours le moyen des valeurs angulaires des condensateurs va être calculé.

8. Dispositif pour la mise en oeuvre du procédé selon une des revendications 1 à 7 avec un condensateur du mesurage à tourner (1) et un amplificateur du mesurage (6) connectée à celui-la, **caractérisé en ce qu'**il comporte un microprocesseur (4), un convertisseur n/a (5) et une mémoire (8) est que le condensateur du mesurage (1) consiste au moins en deux cartes imprimés (10; 14) disposé parallèle en intervalle avec un vexille de blindage (3) arrangé tournant entre lesdites cartes imprimés, en quoi une carte imprimés (10) comporte au moins quatre zones de piste conductrice (E1,E2,E3,E4) arrangés concentriques par rapport à l'axe tournant du vexille de blindage (3) est séparés divergents électriquement.

9. Dispositif selon la revendication 8, **caractérisé en ce que** les pistes de conductrices sont arrangés comme pistes (E1,E2,E3,E4) en demi-cercle, séparé l'un de l'autre, en quoi deux pistes (E1,E2;E3,E4) ont le même diamètre et que les parties de séparation entre les uns des deux pistes (E1,E2) sont décalés à 90° au respect des parties de séparation des autres deux pistes (E3,E4).

10. Dispositif selon la revendication 8 ou 9, **caractérisé en ce que** le vexille (3) consiste en tôle aluminium, de préférence avec un grosseur entre 0.2 et 0.5 mm.
